(19) Europäisches Patentamt / European Patent Office / Office européen des brevets

(11) **EP 4 116 855 B1**

(12) **FASCICULE DE BREVET EUROPEEN**

(45) Date de publication et mention
de la délivrance du brevet:
**22.11.2023 Bulletin 2023/47**

(21) Numéro de dépôt: **22182983.1**

(22) Date de dépôt: **05.07.2022**

(51) Classification Internationale des Brevets (IPC):
***G06F 21/78*** *(2013.01)*

(52) Classification Coopérative des Brevets (CPC):
**G06F 21/78;** G06F 2221/2143

(54) **CIRCUIT INTÉGRÉ PROGRAMMABLE UTILISANT UNE SOURCE RADIOACTIVE**

PROGRAMMIERBARE INTEGRIERTE SCHALTUNG, DIE EINE RADIOAKTIVE QUELLE VERWENDET

PROGRAMMABLE INTEGRATED CIRCUIT USING A RADIOACTIVE SOURCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.07.2021 FR 2107304**

(43) Date de publication de la demande:
**11.01.2023 Bulletin 2023/02**

(73) Titulaire: **Commissariat à l'énergie atomique et aux énergies alternatives 75015 Paris (FR)**

(72) Inventeur: **MAINGUET, Jean-François 38054 GRENOBLE Cedex 9 (FR)**

(74) Mandataire: **Cabinet Nony 11 rue Saint-Georges 75009 Paris (FR)**

(56) Documents cités:
**EP-A2- 1 508 841   KR-A- 20150 057 884**

## Description

### Domaine technique

La présente invention concerne un circuit intégré programmable utilisant une source radioactive.

### Technique antérieure

Il existe de nombreuses applications où il y aurait un intérêt à livrer une information en fixant une date avant laquelle elle resterait cachée et inaccessible.

Historiquement, cela a été mis en oeuvre à l'aide de coffres-forts munis de serrures dites « à retardement », comme rappelé dans l'article Envoyer des messages à retardement, du Professeur Delahaye, publié dans la revue Pour la Science, numéro 518, décembre 2020.

Puis, de nombreux scientifiques ont cherché des solutions équivalentes dans le domaine numérique.

Certains ont ainsi proposé des solutions consistant à chiffrer une information avec un problème qui n'est solvable qu'au terme de calculs que l'on estime nécessiter une durée minimale pour être effectués. Néanmoins, les progrès de l'informatique font que la durée initialement estimée pour réaliser ces calculs peut se trouver significativement réduite. De plus, cette solution est difficile à mettre en oeuvre, coûteuse sur le plan énergétique, et temporellement peu précise.

Par ailleurs, toute solution reposant sur un tiers de confiance n'est pas entièrement satisfaisante, notamment car elle suppose que l'on ne puisse pas récupérer l'information de manière anticipée auprès de ce tiers de confiance. Or ce dernier peut se voir exposer à des contraintes l'obligeant à révéler l'information.

On connaît par ailleurs des circuits intégrés dits « real-time docks » ou RTC, tels que celui proposé par la société ST sous la marque TIMEKEEPER SNAPHAT, qui comportent une horloge et une batterie lithium encapsulée, conférant une durée de vie de l'ordre d'une dizaine d'années. Ces circuits ne sont pas toutefois conçus pour préserver un secret.

Il a été proposé dans les brevets US9530529 ou US10083771 d'intégrer des sources radioactives dans des circuits intégrés en tant que générateur bétavoltaïque.

Le brevet US7476865 propose d'asservir une horloge sur une source radioactive, et utilise une source de $^{63}$Ni disposée à proximité d'une photodiode polarisée en inverse utilisée comme détecteur. Il est décrit de verrouiller un oscillateur local sur un système utilisant la désintégration radioactive, en exploitant le fait que le rythme des désintégrations est constant pour peu que la demi-vie soit longue. La demi-vie de 100 ans du $^{63}$Ni permet de considérer dans ce brevet antérieur que le niveau de radioactivité est constant pour le résultat qui est recherché.

On connaît également des générateurs de nombres aléatoires basés sur l'utilisation de radionucléides, comme décrit dans US10708044 ou JP10142340. KR20150057884 fait partie de l'art antérieur.

### Exposé de l'invention

Il demeure un besoin pour bénéficier d'une solution relativement simple et peu coûteuse à mettre en oeuvre, permettant de retarder la libération d'une information ou l'exécution d'une action pendant une durée prédéfinie programmable, pouvant excéder plusieurs années.

### Résumé de l'invention

L'invention vise à répondre à ce besoin, et elle y parvient, selon un premier de ses aspects, en proposant un circuit intégré programmable, comportant :

- au moins un composant dit « chrono évolutif », évoluant de manière autonome au sein du circuit intégré, en fonction du temps écoulé depuis une phase d'initialisation du circuit intégré, cette évolution s'effectuant grâce à une source radioactive interne,
- au moins un circuit de contrôle sensible à l'évolution temporelle dudit composant et présentant au moins une sortie interne protégée qui ne change d'état qu'après qu'une durée prédéfinie, programmable, se soit écoulée depuis la phase d'initialisation du circuit intégré.

De préférence, le composant chrono évolutif comporte une diode soumise au rayonnement de la source, la source radioactive étant notamment déposée sur ou à proximité de la diode, voire en son sein.

Grâce à l'utilisation d'une source radioactive interne au circuit intégré, il est possible d'exploiter le rayonnement produit par cette source de deux manières.

La première consiste à exploiter la décroissance de l'activité avec le temps, et à détecter le moment où cette baisse d'activité correspond au fait qu'une durée prédéfinie s'est écoulée.

La deuxième consiste à exploiter l'activité de la source pour produire de l'énergie électrique permettant d'alimenter une horloge électronique interne.

#### i) Exploitation de la décroissance de l'activité de la source comme mesure du temps écoulé

##### Composant chrono évolutif

La source radioactive est utilisée au sein du composant pour ses propriétés de décroissance de l'activité avec le temps.

Dans ce cas, elle est associée à un détecteur sensible à son rayonnement et configuré pour délivrer un signal représentatif de son activité.

La décroissance de l'activité est une propriété intrinsèque du matériau de la source et a lieu sans nécessiter un apport d'énergie extérieur au circuit intégré ; l'énergie extérieure peut être apportée pour la programmation du circuit intégré et la lecture de l'activité de la source, si besoin.

Source radioactive

Le circuit intégré comporte ici au moins un élément radioactif choisi en fonction de sa demi-vie et de l'ordre de grandeur de la durée que l'on souhaite pouvoir programmer dans le circuit.

L'élément radioactif peut être choisi parmi 63Ni, 3H, ou encore 210Po, ou tout autre élément possédant une demi-vie n'excédant pas quelques centaines d'années.

63Ni convient tout particulièrement à la réalisation d'un circuit intégré selon l'invention utilisé sur une durée comprise entre quelques mois et quelques centaines d'années.

Dans des variantes, le circuit intégré comporte plusieurs sources de demi-vies différentes, afin par exemple de gagner en précision ou de permettre une plus large plage de programmation de la durée.

La source radioactive peut aussi servir à alimenter le circuit intégré ou ce dernier comportant une source radioactive destinée à son alimentation électrique, afin par exemple d'avoir un fonctionnement totalement autonome du circuit intégré.

L'activité initiale de la source radioactive peut être inférieure ou égale à 10 MBq.

Détecteur

Le détecteur utilisé est de préférence un détecteur à semi-conducteur. De préférence, le composant chrono-évolutif comporte une jonction PN ou PIN, en particulier une diode de type PIN.

La source radioactive est de préférence déposée sur ou à proximité de la diode, mais elle peut encore être implantée au sein de la zone de déplétion. Lorsque la source radioactive est métallique, un isolant électrique peut être interposé entre la source et la diode afin de ne pas court-circuiter celle-ci.

Le détecteur peut comporter en variante un scintillateur, si l'encombrement du circuit intégré le permet, ou d'autres types de détecteurs, par exemple de type CdTe.

**ii) Exploitation de l'énergie du rayonnement pour alimenter le circuit intégré**

Composant chrono évolutif

Dans ce cas, la source radioactive est utilisée de manière à produire de l'électricité, et l'électricité produite est utilisée pour faire fonctionner de manière autonome une horloge interne au circuit intégré, ainsi de préférence que le circuit de contrôle.

Ainsi, ledit composant comporte de préférence :

- Au moins une source interne d'énergie,
- Au moins un circuit d'horloge alimenté par la source interne d'énergie.

La source interne d'énergie comporte de préférence au moins une source radioactive et un circuit de production d'énergie électrique à partir de la source.

Le circuit intégré disposant de l'énergie produite par la source radioactive pour faire fonctionner l'horloge interne de manière autonome, l'évolution du composant chrono-évolutif peut se faire sans nécessiter un apport d'énergie extérieur au circuit intégré.

L'horloge interne est de préférence capable de générer des impulsions de durée fixe de manière répétable.

Source radioactive

Les batteries nucléaires, notamment bétavoltaïques, sont connues en elles-mêmes, et la source radioactive selon cette variante de l'invention peut être mise en oeuvre de manière similaire.

On pourra se référer par exemple au brevet US9530529 qui décrit un procédé de fabrication d'une batterie radio-isotopique à semi-conducteur, ou au brevet US10083771 (« Radioisotope power source embedded in electronic devices »).

On utilise de préférence un élément radioactif émettant un rayonnement béta, par exemple choisi parmi le tritium ou 63Ni, entre autres possibilités.

Cette source peut être associée à une jonction PN, notamment une diode PN, de façon à produire de l'électricité.

Dans ce qui suit, la source radioactive peut être utilisée selon i) ou ii).

Mémoire

Le circuit intégré peut comporter au moins une mémoire non volatile protégée dont la lecture n'est possible que lorsque la sortie interne du circuit de contrôle est dans un état prédéfini.

Cette mémoire peut comporter l'information que l'on souhaite cacher pendant une durée prédéfinie ou au moins une clé nécessaire pour déchiffrer l'information que l'on souhaite cacher.

Cette mémoire peut encore contenir un code destiné à être exécuté lorsque la sortie interne du circuit de contrôle change d'état, après que la durée programmée s'est écoulée.

Dans le cas i) ci-dessus notamment, la mémoire peut également contenir une valeur représentative de l'activité initiale de la source radioactive et/ou de l'activité cible de la source, avec laquelle l'activité à un instant donné est comparée afin de déterminer si une durée prédéfinie s'est écoulée.

La mémoire peut être de type divers, notamment un type choisi parmi EPROM, Flash, PROM, EEPROM, UVPROM, SSD, CBRAM, FeRAM, Millipede, MRAM, Mémoire holographique, NRAM, PRAM, RRAM3D, ou XPoint.

La mémoire peut être associée à un circuit dit « fusible » qui permet une écriture initiale dans la mémoire lors d'une phase d'initialisation et qui ensuite peut être activé pour empêcher tout accès et modification depuis l'extérieur à l'information enregistrée dans la mémoire.

Le circuit peut comporter un fusible pour désactiver au moins une entrée du circuit permettant de programmer la durée prédéfinie.

## Circuit de contrôle

De préférence, notamment dans le cas i) ci-dessus, le circuit de contrôle comporte :

- au moins un circuit de lecture du niveau de radioactivité de la source,
- au moins un comparateur pour comparer le niveau de radioactivité lu avec un niveau cible et générer un changement d'état de la sortie interne protégée seulement lorsque le niveau de radioactivité est en deçà du niveau cible, en raison de la décroissance naturelle de l'activité de la source.

Le niveau cible est déterminé lors de la programmation du circuit intégré et n'est plus modifiable.

Lorsque la source radioactive est utilisée selon i), le circuit de contrôle comporte de préférence un circuit de calcul du niveau cible à partir d'une date ou durée donnée en entrée et du niveau de la source au moment de la définition du niveau cible.

Lorsque la source radioactive est utilisée selon ii), le circuit de contrôle comporte de préférence un circuit de calcul pour convertir une date ou un délai en entrée en un nombre de référence correspondant d'impulsions du circuit d'horloge, le circuit d'horloge étant agencé pour comptabiliser le nombre d'impulsions d'horloge s'étant écoulé depuis la phase d'initialisation, le circuit de contrôle comparant le nombre d'impulsions écoulé au nombre de référence. Le circuit d'horloge est par exemple réalisé de manière conventionnelle avec un oscillateur à quartz.

## Moyens de sécurisation

Le circuit intégré peut comporter des moyens de sécurisation de différents ordres.

Tout d'abord, le circuit peut comporter des moyens qui empêchent sa reprogrammation, tels qu'un fusible par exemple qui est activé après la programmation initiale.

Le circuit peut comporter des moyens physiques de blindage visant à le protéger vis-à-vis de la radioactivité locale, par exemple un blindage en plomb, d'attaques électromagnétiques, par exemple un blindage électrique, ou d'attaques physiques du circuit, par exemple une piste conductrice en forme de serpentin qui recouvre certaines zones du circuit et qui est destinée à rompre en cas d'ouverture de celui-ci, le circuit étant agencé pour ne plus fonctionner en cas de rupture de la piste.

Le circuit peut encore comporter un ou plusieurs capteurs d'environnement, tels que des capteurs de température, tension ou rayonnement, afin de détecter des conditions anormales de lecture ou de fonctionnement du circuit, et générer dans ce cas un avertissement ou toute autre mesure prédéfinie, par exemple une interdiction de lecture du secret programmé dans le circuit.

## Exemple à secrets multiples

Dans un exemple de réalisation, le circuit intégré comporte au moins des première et deuxième sources radioactives ayant des durées de demi-vie différentes, un premier circuit de contrôle comportant :

- au moins un circuit de lecture du niveau de radioactivité de la première source radioactive,
- au moins un comparateur pour comparer le niveau de radioactivité lu avec un premier niveau cible et autoriser un changement d'état d'une première sortie interne, notamment autoriser la lecture d'un premier secret, seulement lorsque le niveau de radioactivité est en deçà du premier niveau cible, en raison de la décroissance naturelle de l'activité de la première source,

et un deuxième circuit de contrôle comportant :

au moins un circuit de lecture du niveau de radioactivité de la deuxième source,
au moins un comparateur pour comparer le niveau de radioactivité lu avec un deuxième niveau cible et autoriser un changement d'état d'une deuxième sortie interne, notamment autoriser la lecture d'un deuxième secret seulement lorsque le niveau de radioactivité est en deçà du deuxième niveau cible, en raison de la décroissance naturelle de l'activité de la deuxième source.

En variante, le circuit comporte par exemple au moins une source radioactive, au moins un circuit de lecture du niveau de radioactivité de la source, un premier circuit de contrôle comportant au moins un comparateur pour comparer le niveau de radioactivité lu avec un premier niveau cible et autoriser un changement d'état d'une première sortie interne, notamment autoriser la lecture d'un premier secret, seulement lorsque le niveau de radioactivité est en deçà du premier niveau cible, en raison de la décroissance naturelle de l'activité de la source,

et un deuxième circuit de contrôle comportant au moins un comparateur pour comparer le niveau de radioactivité lu avec un deuxième niveau cible et autoriser un changement d'état d'une deuxième sortie interne, notamment autoriser la lecture d'un deuxième secret, seulement lorsque le niveau de radioactivité est en deçà du deuxième niveau cible, en raison de la décroissance naturelle de l'activité de la source.

Exemple à comparaisons multiples

Dans un autre exemple de réalisation de l'invention, le circuit intégré comporte au moins une source radioactive et au moins un circuit de lecture du niveau de radioactivité de la source, et

- au moins un comparateur pour comparer le niveau de radioactivité lu avec un premier niveau cible et générer une sortie interne correspondante,
- au moins un comparateur pour comparer le niveau de radioactivité lu avec un deuxième niveau cible et générer une sortie interne correspondante,

le circuit de contrôle étant agencé pour n'autoriser une action prédéfinie, notamment la lecture d'un secret, que lorsque les sorties internes des premier et deuxième comparateurs sont dans des états prédéfinis.

Procédé de protection d'une information

L'invention a encore pour objet un procédé pour protéger une information pendant une durée prédéfinie à l'aide d'un circuit intégré tel que défini plus haut, comportant les étapes consistant à :

- Chiffrer l'information de manière à ne permettre son déchiffrement qu'en présence d'au moins une clé de déchiffrement,
- enregistrer ladite clé de déchiffrement en tant que secret dans la mémoire protégée du circuit intégré,
- programmer ledit circuit avec la durée prédéfinie.

Procédé pour effectuer une action prédéfinie après une durée donnée

L'invention a encore pour objet, un procédé pour effectuer une action prédéfinie à partir d'un délai ou d'une date programmée, comportant les étapes suivantes :

- enregistrer dans un circuit intégré selon l'invention un délai ou une date ou un niveau cible correspondant à partir de laquelle ou duquel une action doit être effectuée,
- effectuer ladite action lorsque la sortie interne du circuit change d'état une fois la date atteinte ou le délai écoulé et que le niveau de radioactivité lu a franchi le niveau cible correspondant.

Cette action est par exemple une transaction électronique, le déblocage d'un appareil électronique ou de l'accès à un document, l'affichage d'une information, le déblocage de la possibilité d'effectuer une autre action, l'ouverture d'un coffre-fort, l'activation d'un programme, entre autres exemples.

L'action prédéfinie peut ainsi être l'activation d'une carte bancaire ou autre carte à puce, de façon à ne rendre cette carte utilisable par un utilisateur qu'après un délai ou une date D prédéfini et/ou avant un délai ou une date D prédéfini. Ce délai est par exemple celui précédent l'expiration d'une carte bancaire déjà en possession de l'utilisateur, ou une date postérieure à la date de réception attendue d'un colis postal contenant ladite carte. Une autre action prédéfinie peut être la dé-activation d'une carte bancaire à la date d'expiration inscrite sur la carte.

L'action prédéfinie peut encore être une action d'activation d'une application chargée dans un dispositif électronique, notamment un téléphone portable, de façon à ne rendre cette application utilisable par un utilisateur qu'après un délai ou une date D prédéfini. Par exemple, l'application est déjà résidante dans le dispositif mais inactive avant une date donnée, et son activation peut par exemple correspondre à une date de lancement d'une nouvelle fonctionnalité pour un ensemble d'utilisateurs possesseurs d'un même dispositif.

On peut déterminer le niveau cible à partir de moyens de calcul externes au circuit intégré.

On peut de plus authentifier un utilisateur du circuit en vérifiant la correspondance entre une clé publique enregistrée sur le circuit et une clé privée détenue par l'utilisateur, en fonction du résultat de cette vérification, autoriser, ou non, la programmation du circuit.

Le circuit intégré peut recevoir une requête et traiter cette requête en fonction de l'état de la sortie interne, notamment recevoir un nombre aléatoire et renvoyer un nombre correspondant qui l'authentifie tant que la sortie interne est dans un état prédéfini.

L'invention a encore pour objet un procédé de génération d'une blockchain au cours duquel au moins une action de validation d'un bloc dépend de l'écoulement d'une durée prédéfinie au sein d'un circuit selon l'invention.

Cela peut permettre de remplacer tout ou partie d'une preuve de travail par une preuve de temps écoulé, et ainsi répondre au besoin de diminuer la consommation d'énergie inhérente aux opérations de minage. La complexité du calcul de minage est par exemple réduite en imposant au mineur ayant effectué ce calcul d'attendre une durée d'attente prédéfinie avant de pouvoir miner un nouveau bloc. Le circuit selon l'invention peut être utilisé pour garantir l'écoulement de cette durée.

**Brève description des dessins**

L'invention pourra être mieux comprise à la lecture de la description détaillée qui va suivre, d'exemples de mise en oeuvre non limitatifs de celle-ci, et à l'examen du dessin annexé, sur lequel :

[Fig 1] représente de manière partielle et schématique un exemple de circuit intégré selon l'invention,
[Fig 2] représente de manière partielle et schématique certains détails du composant chrono évolutif du circuit intégré de la figure 1,
[Fig 3] représente de manière partielle et schématique un exemple de diode pouvant être utilisé pour réaliser le composant chrono évolutif,
[Fig 4] illustre de manière partielle et schématique un exemple de circuit de lecture selon l'invention,
[Fig 5], [Fig 6], [Fig 7A], [Fig 7B] et [Fig 7C], [Fig 8], [Fig 9], [Fig 10], [Fig 11] et [Fig 12]] représentent de manière partielle et schématique des variantes du circuit intégré de la figure 1,
[Fig 13], Fig [14] et [Fig 15] illustrent de manière partielle et schématique une variante du circuit intégré de la figure 1 dans lesquelles le circuit est autonome, et,
[Fig 16] représente de manière partielle et schématique un autre exemple de réalisation d'un circuit intégré selon l'invention.

**Description détaillée**

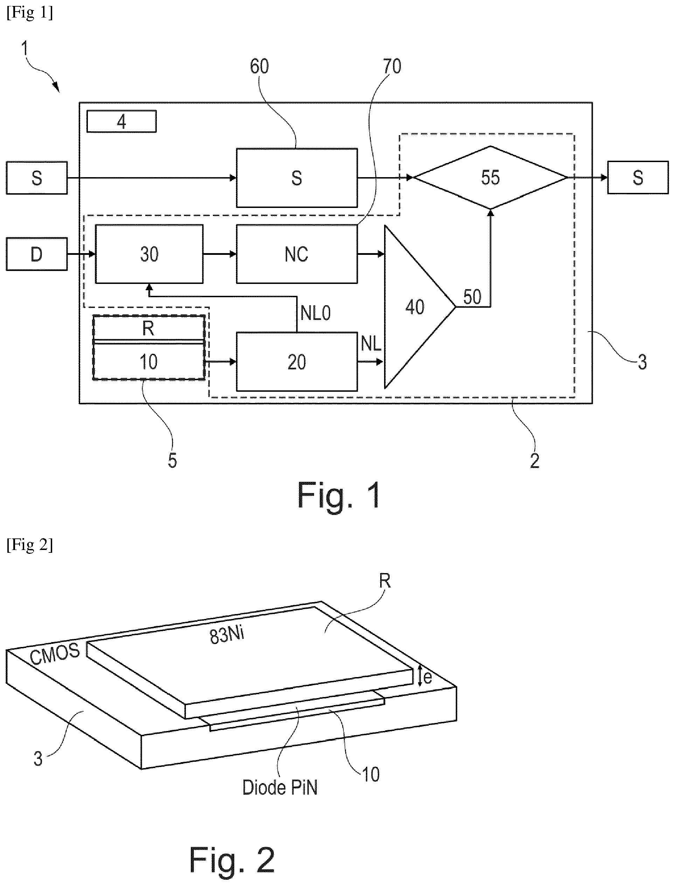

On a illustré à la figure 1 un exemple de circuit intégré programmable 1 selon l'invention, réalisé par exemple entièrement sur une seule puce 3, par exemple selon une technologie de type CMOS.

Le circuit 1 comporte un composant chrono évolutif 5 évoluant de manière autonome, en fonction du temps écoulé depuis une phase d'initialisation du circuit intégré, et un circuit 2 de contrôle qui permet une mesure du temps écoulé et le déclenchement d'une action en fonction de cette mesure.

L'évolution du composant 5 est dite « autonome » car elle se fait ici grâce à la décroissance naturelle d'une source radioactive R interne au circuit intégré, et ne nécessite pas d'apport d'énergie extérieure. Cette source radioactive est par exemple du $^{63}$Ni.

Le composant 5 comporte un détecteur à semiconducteur, par exemple une diode 10, sur laquelle est déposée le matériau de la source radioactive R, comme détaillé plus loin.

Dans l'exemple considéré, le circuit intégré 1 est agencé pour mémoriser un secret S et un délai programmable D, et le circuit de contrôle 2 bloque la lecture du secret S tant que le délai D ne s'est pas écoulé depuis une phase d'initialisation du circuit intégré 1.

Le secret S est mémorisé lors de la phase d'initialisation ou avant celle-ci dans une mémoire non volatile 60 du circuit intégré 1. Le secret S peut ensuite être protégé des observations extérieures par tout moyen adapté, par exemple à l'aide d'un fusible 4 qui est grillé pour empêcher la réécriture de la mémoire après sa programmation et par un blindage éventuel, connu de l'homme du métier.

D'autres moyens de protection anti-intrusion ou anti-attaque, connus de l'homme du métier, peuvent être ajoutés au circuit 1. On peut par exemple ajouter un blindage au circuit 1, telle qu'une grille ou grille active, et/ou un blindage en plomb contre d'éventuelles sources extérieures de radioactivité, comme décrit plus bas. On peut encore utiliser un dispositif additionnel permettant de détecter certaines conditions anormales, telles qu'une variation de température ou de tension. On peut encore brouiller les informations contenues dans le circuit 1 grâce à des méthodes classiques.

Le circuit de contrôle 2 peut comporter, comme illustré, un circuit 20 de lecture du niveau de radioactivité NL de la source R, un circuit 30 de calcul d'un niveau cible NC, et une mémoire 70 sur laquelle le niveau cible NC ainsi calculé est enregistré.

Les mémoires 60 et 70 peuvent être deux mémoires séparées ou deux blocs d'une même mémoire.

Le niveau cible NC n'est pas nécessairement secret mais il est non modifiable depuis l'extérieur une fois enregistré dans la mémoire 70. On peut notamment prévoir au sein du circuit intégré des moyens pour en protéger la modification, par exemple un fusible qui est activé après enregistrement du niveau cible NC. Ce fusible peut être le même ou non que celui qui sert à interdire l'accès à la mémoire 60.

Le circuit de contrôle 2 comporte un comparateur 40 afin de comparer le niveau de radioactivité NL lu avec le niveau cible NC, et présente une sortie interne protégée 50 qui ne change d'état que lorsque le résultat de cette comparaison change, c'est-à-dire qu'après que la durée prédéfinie D se soit écoulée et que le niveau de radioactivité NL lu est en deçà du niveau cible NC.

Dans l'exemple considéré, ce changement d'état est traité par un circuit de traitement 55 qui déclenche comme action la lecture du bloc mémoire 60 et donc, la révélation du secret S, mais dans des variantes d'autres actions peuvent être déclenchées, telles que l'exécution d'un code par exemple.

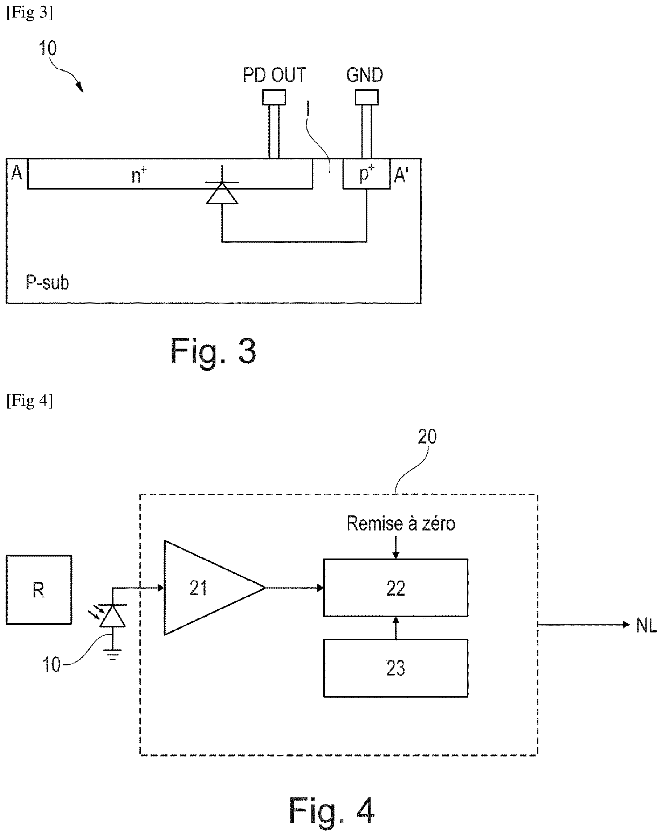

On va maintenir décrire, en se référant plus particulièrement aux figures 2 et 3, le composant chrono évolutif 5.

La diode 10 est par exemple fabriquée avec la technologie CMOS directement sur la puce 3. Elle peut être réalisée verticalement comme décrit dans le brevet US 9,530,529 ou l'article de Krasnov, Andrey, et al. "A nuclear battery based on silicon pin structures with electroplating 63Ni layer." (Nuclear Engineering and Technology 51.8 (2019) : 1978-1982).

Elle peut encore être réalisée horizontalement comme décrit dans le brevet US 10,083,771.

Alternativement, la diode 10 peut être fabriquée à part et reportée sur la puce 3, comme décrit dans l'article Wyrsch, Nicolas, et al. "Thin-film silicon detectors for particle détection." (physica status solidi (c) 1.5 (2004): 1284-1291).

Alternativement, la diode 10 peut être directement fabriquée sur la puce 3 par déposition.

La diode 10 a par exemple des dimensions allant de $100 \times 100\ \mu m^2$ à $3 \times 3\ mm^2$.

La source radioactive R est par exemple déposée sur la surface de la diode 10 par dépôt électrolytique ou chimique. Un isolant électrique peut être ajouté entre la diode et la source radioactive.

La quantité de matière radioactive à déposer, et notamment son épaisseur, dépend du rendement observé en pratique compte-tenu de certains paramètres, par exemple la taille de la diode 10, la durée de lecture ou encore le rayonnement effectif capturé par la diode 10.

On a par exemple une source de $^{63}$Ni d'épaisseur e de 2.6 microns environ pour une diode de dimensions $1 \times 1\ mm^2$.

Une couche isolante (non représentée) peut être ajoutée entre la diode 10 et la source radioactive R pour éviter les courts-circuits lorsque la source radioactive R conduit le courant.

La structure de la diode 10 est par exemple celle d'une diode PN ou PIN, comme illustré à la figure 3, polarisée en inverse et présentant une zone non ou peu dopée I, dite « intrinsèque », agencée entre deux zones dopées P+ et N+.

La diode 10 peut être encapsulée avec le reste de la puce 3 dans un matériau d'encapsulage du circuit intégré, par exemple une résine ou une céramique, muni de pattes ou de plots de connexion à des circuits extérieurs. Afin de protéger la diode 10 de la lumière pour ne pas perturber la mesure, on peut la recouvrir si nécessaire d'une couche d'un blindage, notamment en métal. On peut par exemple ajouter une piste conductrice en forme de serpentin qui recouvre certaines zones du circuit destinée à rompre en cas d'ouverture de celui-ci, le circuit étant agencé pour ne plus fonctionner en cas de rupture de la piste.

La diode 10 ainsi réalisée et polarisée génère un courant qui peut être lu par le circuit de lecture 20 afin de déterminer le niveau de radioactivité NL.

Comme représenté à la figure 4, le circuit de lecture 20 comporte par exemple un amplificateur 21, suivi d'un compteur d'impulsions 22.

Le compteur 22 présente une remise à zéro 220 et une entrée 225 autorisant le comptage sur état (par exemple, à zéro, aucun comptage, et à un, le comptage est effectué).

La mesure se fait pendant une durée prédéfinie générée par un circuit monostable 23, celui-ci délivrant un créneau d'une durée fixe et répétable de manière précise, par exemple environ une seconde. Le circuit monostable 23 est connecté à l'entrée 225 d'autorisation du compteur.

Lorsqu'une lecture est demandée, par exemple sur réception d'un signal extérieur, le circuit de lecture effectue par exemple les actions suivantes :

○ Le compteur 22 est remis à zéro ;
○ le circuit monostable 23 est déclenché, autorisant le comptage des évènements pendant une durée prédéfinie ;
○ une fois la durée du circuit monostable 23 écoulée, le comptage s'arrête. Un signal est généré indiquant que la lecture est terminée et que le résultat de la lecture est disponible.

Le circuit monostable 23 comporte de préférence une compensation en température et en tension de manière à présenter une stabilité compatible avec la précision recherchée, par exemple avec une référence de tension band-gap pour la tension.

Comme décrit plus haut, on peut aussi utiliser comme moyen de protection supplémentaire un ou des capteurs permettant de détecter une variation anormale de température et/ou de tension.

Le résultat de la lecture est un nombre NL qui représente le niveau de radioactivité de la source R.

Par exemple, pour un niveau de radioactivité mesuré égal à 1000 pour une source de $^{63}$Ni, dont la demi-vie est d'environ 100 ans, la même mesure donnera 500 après qu'un siècle se soit écoulé.

De préférence, la durée du monostable est ajustée de manière à mesurer une valeur qui n'excède pas la valeur maximale de comptage du compteur. La quantité de source radioactive R et donc son activité peut aussi être réduite à cette fin.

On peut aussi effectuer plusieurs lectures successives afin de moyenner la valeur lue, afin de diminuer l'effet du bruit et des imprécisions de lecture ou de calcul.

D'autres électroniques de lecture sont utilisables, par exemple celle divulguée dans le brevet US 7476,865 comportant un amplificateur sensible à la charge (« charge sensitive amplifier ») suivi d'un amplificateur de mise en forme du signal (« shaping amplifier ») et d'un tampon.

Le choix de la source radioactive R dépend, entres autres, du délai D souhaité pour la révélation du secret S et de l'ordre de grandeur que l'on souhaite pour le niveau cible NC qui sera calculé en fonction de ce délai.

Le calcul du niveau cible NC est basé sur la loi exponentielle de décroissance radioactive connue de l'état de l'art, qui donne le niveau de radioactivité N d'un élément radioactif en fonction du temps :

$$N(t) = N(0)\, e^{-\lambda t}$$

avec $\lambda =$ ln(2)/demi-vie de l'élément radioactif considéré, et N(0) le niveau initial de radioactivité, lu lors de la phase d'initialisation.

Par exemple, pour une source radioactive R de $^{63}$Ni, un délai D de 200 ans et un niveau NL initial mesuré N(0) de 1000 impliquent un niveau cible NC calculé de 250. Pour un délai D d'un an, le niveau cible NC calculé est d'environ 993.

Pour des délais encore plus courts, notamment de l'ordre d'une journée, le niveau cible NC peut s'avérer est très proche du niveau initial et requiert un comptage précis, de plus grandes quantités de produit radioactif et/ou un détecteur plus grand.

On utilisera alors de préférence un élément radioactif présentant une demi-vie plus courte, par exemple le Tritium ou le Polonium-210, entre autres exemples.

L'utilisation du circuit intégré 1 peut s'effectuer en deux phases.

Le circuit intégré 1 est d'abord programmé avant de pouvoir être interrogé. La phase de programmation s'effectue une seule fois, lors de l'initialisation du circuit. Ce dernier peut ensuite être interrogé selon les besoins de l'utilisateur.

Pendant la phase de programmation, on donne en entrée le secret S qui est mémorisé dans la mémoire protégée 60.

On donne aussi en entrée le délai D à partir duquel on souhaite que le secret S soit révélé.

Le circuit de lecture 20 lit le niveau de radioactivité initial NL0 et le transmet au circuit de calcul 30.

Le circuit de calcul 30 calcule le niveau cible NC à partir du délai D donné en entrée et du niveau de radioactivité initial NL0.

Ce calcul est par exemple effectué à partir d'un microcontrôleur présent sur la puce 3, et/ou en utilisant des tables précalculées sur la base de ce qui a été décrit plus haut.

Le niveau cible NC est ensuite mémorisé dans le bloc de mémoire 70.

Dans l'exemple considéré, le circuit intégré 1 comporte de plus un fusible 4, par exemple une mémoire du type « *write-once* », c'est-à-dire qui ne peut être écrite qu'une seule fois.

Une fois la phase de programmation terminée, le fusible 4 est activé, ce qui indique que le circuit intégré 1 n'est plus vierge et a déjà été programmé. La phase d'initialisation est alors terminée et les entrées pour accéder depuis l'extérieur au secret S et au délai D pour les modifier sont désactivées. L'accès au niveau cible NC pour le modifier n'est pas non plus possible pour l'extérieur. L'activation du fusible 4 empêche également de lire le secret depuis l'extérieur tant que la durée D ne s'est pas écoulée depuis la phase d'initialisation, et peut le cas échéant empêcher aussi la lecture du niveau cible NC et du délai D.

Lorsque le fusible 4 est activé, la seule opération possible est une tentative de lecture du secret S. Il suffit alors de fournir de l'énergie pour démarrer la requête et interroger le circuit intégré 1.

Lors de la phase d'interrogation du circuit intégré 1 depuis l'extérieur, le circuit de lecture 20 lit le niveau de radioactivité NL de la source R et le transmet au circuit de calcul 30.

Le niveau lu est comparé au niveau cible NC déterminé lors de la phase de programmation, grâce au comparateur 40 qui effectue par exemple une simple soustraction des deux valeurs et observe le signe du résultat.

Si le niveau lu NL est inférieur au niveau cible NC, alors le délai D est expiré et la sortie interne 50 change d'état. Le circuit intégré 1 est agencé de telle sorte que ce changement d'état permette un accès depuis l'extérieur à la mémoire 60 pour lire le secret S.

Si le niveau lu NL est supérieur au niveau cible NC, il ne se passe rien.

Le circuit intégré 1 selon l'invention n'est pas limité à la révélation d'un seul secret S en fonction d'un seul délai D.

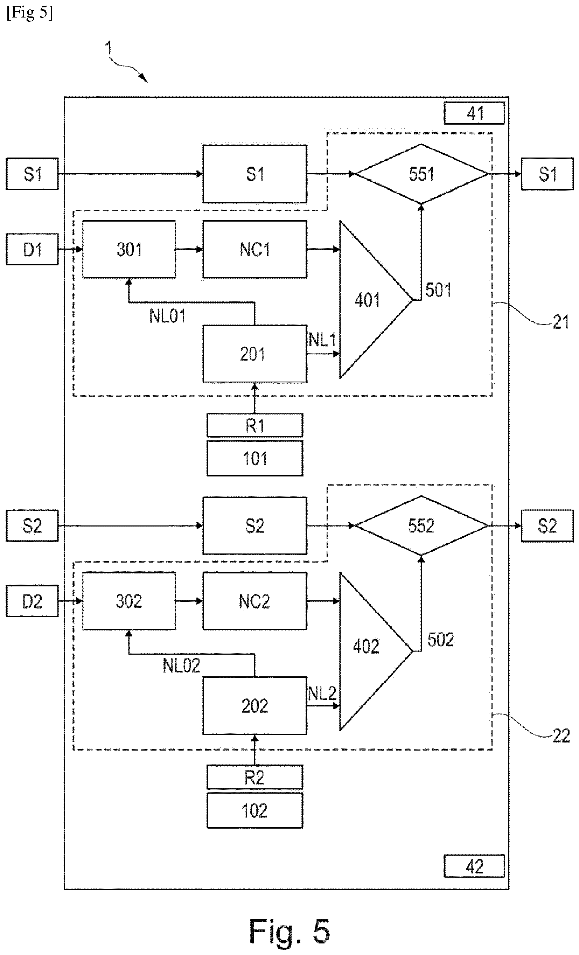

Dans la variante illustrée à la figure 5, le circuit intégré 1 comporte deux circuits de contrôle 21 et 22.

Le premier circuit de contrôle 21 est configuré pour bloquer la lecture d'un premier secret S1 tant qu'un délai D1 ne s'est pas écoulé, tandis que le deuxième circuit de contrôle 22 est configuré pour bloquer la lecture d'un deuxième secret S2 tant qu'un délai D2 ne s'est pas écoulé.

Les circuits de contrôle 21 et 22 comportent chacun une source radioactive R1 et R2, respectivement. On choisit par exemple des sources R1 et R2 présentant des durées demi-vie différentes, par exemple une source de Nickel-63 et une source de Tritium, ce qui permet de s'adapter à des délais plus ou moins longs.

Le circuit de contrôle 21 (respectivement 22) comporte les mêmes éléments que décrits ci-dessus : un circuit de lecture 201 (respectivement 202) qui lit un niveau NL1 (respectivement NL2) de radioactivé de la source R1 (respectivement R2), un circuit de calcul 301 (respectivement 302) pour calculer un niveau cible NC1 (respectivement NC2), un comparateur 401 (respectivement 402) qui compare le niveau cible calculé NC 1 au niveau de lecture lu NL1 et génère une sortie interne 501 (respectivement 502) envoyée à un circuit de traitement 551 (respectivement 552) qui autorise la lecture du secret S1 (respectivement S2) seulement lorsque le niveau de radioactivité est en deçà du niveau cible.

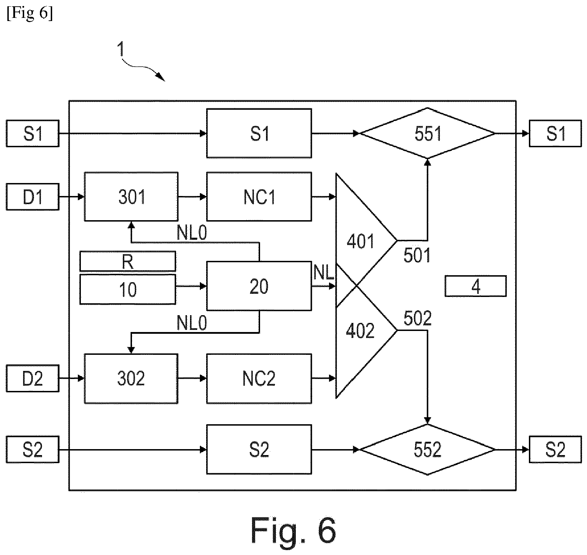

On peut aussi utiliser un seul composant chrono-évolutif 5 pour révéler plusieurs secrets selon les délais écoulés, comme dans la variante illustrée à la figure 6 avec deux secrets S1 et S2 et deux délais respectifs D1 et D2. Dans cet exemple, deux niveaux cibles NC1 et NC2 sont calculés lors de la phase de programmation et comparés lors de la phase d'interrogation au niveau de radioactivité NL de la source R.

Chaque secret S1 ou S2 est révélé, ou non, séparément selon le résultat de la comparaison des niveaux NC1 et NC2 avec le niveau lu NL, respectivement.

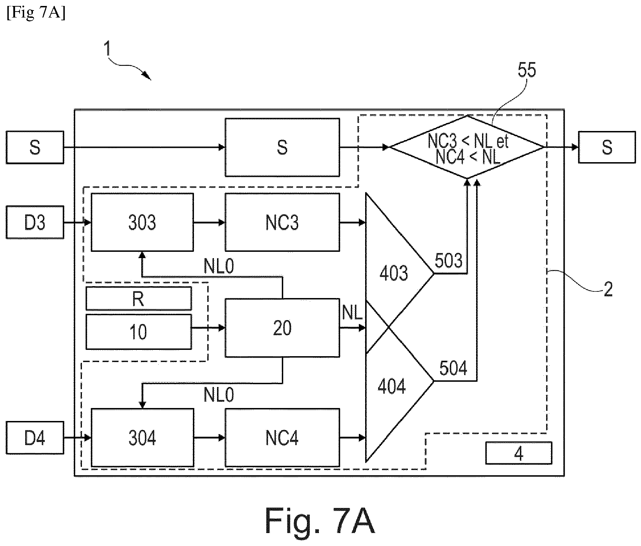

Dans les exemples illustrés aux figures 7A à 7C, on donne en entrée deux délais D3 et D4 et un secret S.

Le circuit intégré 1 comporte un circuit de contrôle 2 comportant deux comparateurs 403 et 404 permettant de comparer deux niveaux cibles NC3 et NC4 avec le niveau de radioactivité NL de la source R.

Dans un premier cas, illustré à la figure 7A, les deux délais doivent être écoulés, c'est-à-dire, les changements d'états des deux sorties 503et 504 doivent être générés, pour que le circuit de traitement 55 permette la révélation du secret S. On peut choisir des délais D3 et D4 différents, ou encore des délais identiques et effectuer plusieurs comparaisons en parallèle, ce qui permet de complexifier le procédé de révélation du secret et donc d'augmenter la sécurité du circuit intégré 1 contre les attaques extérieures.

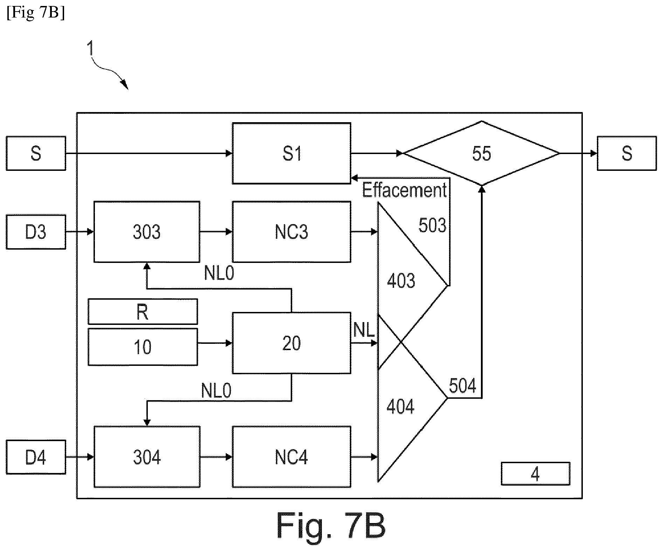

Dans la variante illustrée à la figure 7B, on programme le circuit 1 de façon à effacer le secret S si le délai D3 est dépassé. On définit pour cela le niveau cible NC4 comme niveau cible « d'autorisation » et le niveau cible NC3 comme niveau cible « d'effacement ».

Si la lecture du niveau de radioactivité NL est effectuée une fois le délai D4 écoulé, le comparateur 404 génère un changement d'état de la sortie 504 qui est envoyé au circuit de traitement 55 afin d'autoriser la révélation du secret S. Cependant, si cette lecture est effectuée après le délai D3 écoulé, le comparateur 403 génère un changement d'état de la sortie 503 qui provoque un effacement du secret S en amont du circuit de traitement 55.

Pour que le secret S soit révélé, il faut donc que le délai D4 soit écoulé mais pas le délai D3, c'est-à-dire, que le niveau NL soit en deçà du niveau cible NC4 et au-dessus du niveau cible NC3.

L'effacement du secret S n'est pas effectué lorsque le délai D3 est expiré mais dès qu'on effectue une tentative de lecture en fournissant de l'énergie au circuit 1 une fois le délai D3 écoulé. Ainsi, il est nécessaire d'effectuer des tests régulièrement afin de détruire le secret aussi tôt que possible, si cela est souhaité.

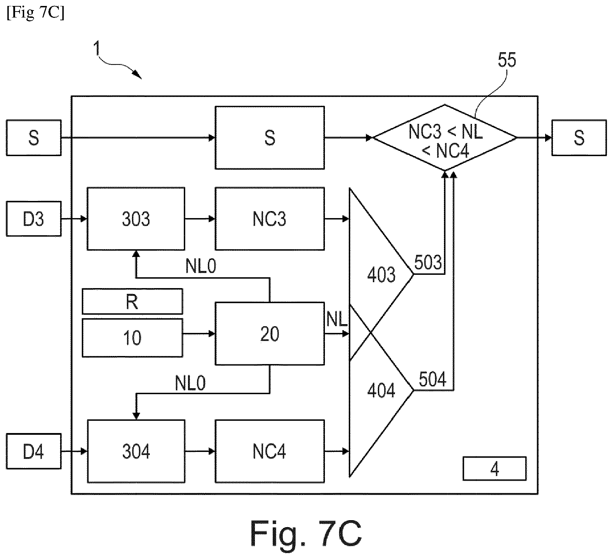

Dans la variante de la figure 7C, le secret S est révélé si la lecture du niveau de radioactivité NL est effectuée une fois le délai D4 écoulé mais avant que le délai D3 se soit écoulé. Le secret S n'est pas effacé une fois le délai D3 écoulé.

On effectue donc simplement la vérification

niveau cible NC3 < niveau lu NL < niveau cible NC4 pour révéler ou non le secret S.

D'autres combinaisons sont envisageables, selon les besoins. On peut par exemple effacer le secret S juste après sa révélation, ce qui permet d'interdire plusieurs lectures du secret. On peut encore bloquer l'accès au circuit 1 pendant une certaine durée après un accès.

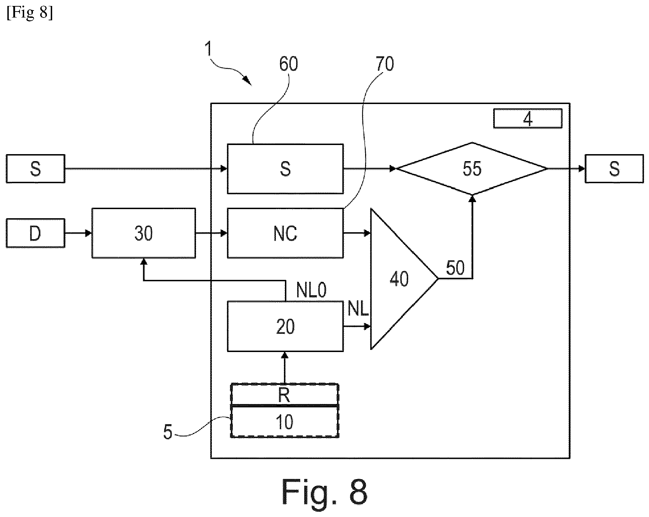

Dans une variante, le circuit de calcul 30 est embarqué sur des moyens externes au circuit intégré, comme illustré sur la figure 8. Ainsi, dans cet exemple, le niveau cible NC est calculé séparément pendant la phase d'initialisation, puis mémorisé dans la mémoire 70, ce qui permet de simplifier le circuit intégré 1. De préférence, on assurera la sécurité des calculs réalisés par des moyens externes afin de ne pas compromettre le niveau cible NC injecté.

Le secret S peut correspondre à tout type d'information.

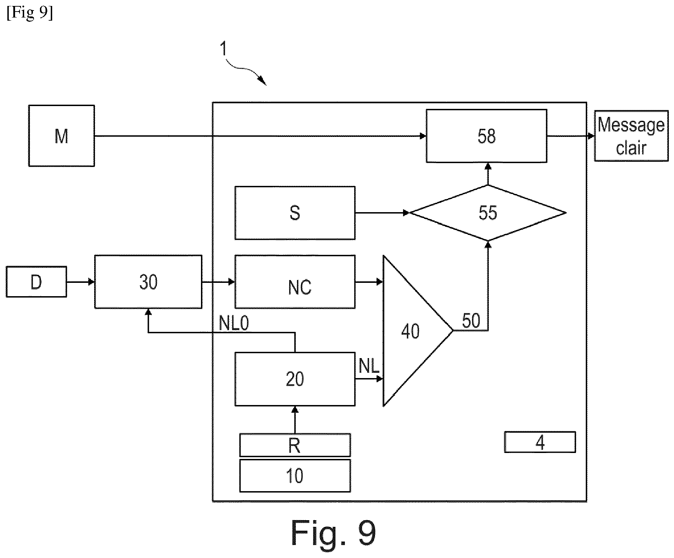

Dans l'exemple illustré à la figure 9, le secret S est une clé de déchiffrement. Celle-ci n'est pas explicitement révélée, comme décrit dans les exemples précédents, mais son utilisation est autorisée une fois le délai D dépassé.

La clé S permet par exemple d'effectuer le décodage d'un message chiffré M donné en entrée, grâce à un algorithme de déchiffrement 58.

L'invention est alors par exemple intégrée dans microcontrôleur *Trusted Platform Module* (TPM) comme fonction supplémentaire, ce qui permet la libération de secrets numériques après une durée déterminée.

Cela peut servir par exemple à effectuer des paiements échelonnés dans le temps, en révélant l'autorisation de prélèvement à certaines dates prédéterminées, ou être utilisé dans des procédures comportant plusieurs participants devant tous accéder à un document ou effectuer une action à une date donnée, par exemple pour des enchères, un vote, un examen ou un concours.

Le secret S peut encore être un mot de passe permettant d'ouvrir un coffre-fort, ce qui permet de disposer d'un coffre-fort à ouverture retardée fonctionnant de manière autonome, sans apport d'énergie extérieure.

L'accès retardé au secret S permet encore de fabriquer et distribuer des dispositifs électroniques, par exemple de type smartphone ou console de jeux vidéo, nécessitant pour fonctionner d'être débloqués avec un code, afin d'en permettre le fonctionnement qu'à un moment donné, postérieur à sa distribution, ce qui fluidifie leur vente à grande échelle.

Similairement, on peut décider d'activer une application particulière d'un smartphone qu'après un certain délai se soit écoulé grâce à l'invention, ce qui permet notamment d'éviter de saturer les serveurs à cet instant.

L'invention n'est bien entendu pas limitée à ces exemples d'applications. On peut encore utiliser le circuit selon l'invention pour programmer l'activation d'une carte bancaire ou toute carte à puce, qui ne peut être utilisable qu'après un délai D choisi.

On peut encore empêcher une transaction d'être dupliquée en « gelant » la carte pendant une durée prédéfinie, notamment des durées croissantes, par exemple 1 minute, puis 3 minutes, puis 10 minutes, ce qui gênerait un voleur s'il voulait s'en servir à répétition.

On peut encore se servir de l'invention pour vendre des tickets de loterie à l'avance, lesdits tickets contenant déjà les gains qui ne sont dévoilés qu'à une date choisie, sans nécessiter de tirage.

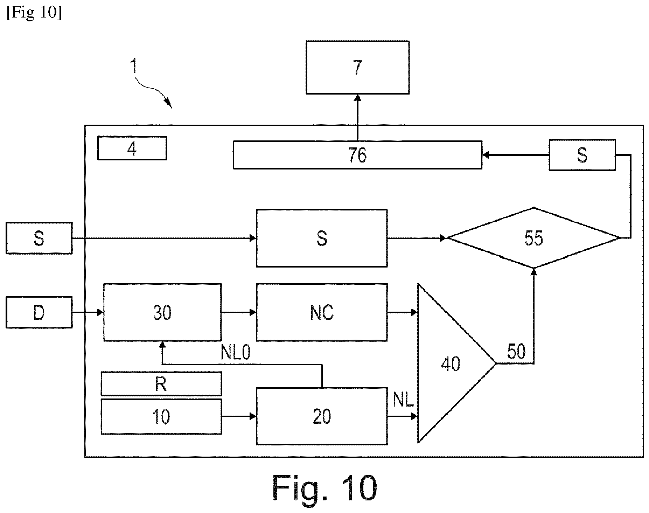

Dans l'exemple illustré à la figure 10, un afficheur externe 7 est connecté au circuit intégré 1, par exemple un afficheur de type papier électronique pouvant garder un affichage sans alimentation. Le circuit 1 peut alors être configuré pour piloter cet afficheur directement, par exemple grâce à un circuit de pilotage 76. En variante, le pilotage de l'afficheur se fait par un ou plusieurs circuits externes.

Avant que le délai D ne soit écoulé, l'afficheur 7 affiche par exemple la date où le secret sera relâché.

Lors de l'interrogation, l'utilisateur fournit de l'énergie (par exemple avec une pile) ce qui permet de mettre à jour l'affichage. Une fois le délai D écoulé, le secret lui-même peut être affiché.

On pourra, concomitamment avec l'afficheur embarqué, adjoindre au circuit intégré un clavier ou tout autre dispositif d'entrée de données, par exemple un écran tactile, afin de disposer d'un système entièrement autonome et complet.

Certaines mesures peuvent être prises pour protéger le circuit intégré 1 d'attaques éventuelles, par exemple un matériau fortement radioactif qu'on approcherait du système afin de perturber la mesure du niveau de radioactivité NL.

Cette perturbation éventuelle est particulièrement problématique si elle a lieu durant la phase de programmation lors de la mesure initiale du niveau de radioactivité NL et de la détermination du niveau cible NC qui s'en suit.

Une contre-mesure possible consiste par exemple à ajouter un blindage en plomb, ou tout matériau équivalent, au circuit intégré 1 afin de réduire les effets d'une radioactivité extérieure.

On peut aussi se munir d'un compteur Geiger ou équivalent au moment de la programmation pour surveiller la radioactivité locale. Le calcul du niveau cible NC peut tenir compte, le cas échéant, de l'influence de ce niveau de radioactivité locale et par exemple empêcher la programmation du circuit 1 tant que le niveau de radioactivité locale peut avoir une influence néfaste sur la mesure initiale du niveau de radioactivité NL.

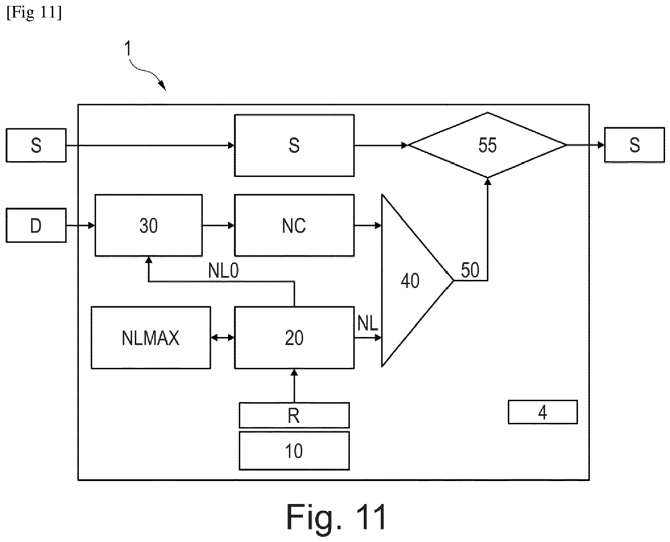

Il est aussi possible d'ajouter une vérification lors de la mesure initiale du niveau de radioactivité NL, comme illustré à la figure 11. Au moment de la fabrication du circuit intégré 1, en environnement sécurisé / maitrisé, on réalise par exemple un test initial afin de déterminer un niveau NLMAX.

Une seconde diode PIN peut aussi être ajoutée au circuit afin de surveiller la radioactivité locale et empêcher la programmation si cela est nécessaire.

Lors de la phase de programmation et durant les interrogations, on vérifie que toutes les mesures suivantes de niveau de radioactivité NL ne dépassent pas ce niveau NLMAX.

Dans le cas contraire, le système s'arrête par exemple de fonctionner, voire s'autodétruit, en activant par exemple un fusible.

D'autres mesures pour protéger le secret sont envisageables. On peut ajouter une diode (non représentée) détectant le niveau de lumière auquel le circuit intégré 1 est exposé et programmer le circuit pour effacer le secret si ce niveau dépasse un certain seuil, l'effacement se faisant par exemple grâce à l'énergie apportée par ladite lumière.

Les exemples décrits ci-dessus ne requièrent de l'énergie qu'au moment de la lecture du niveau de radioactivité NL. Ce sont des systèmes passifs ; en particulier, l'expiration du délai D ne se manifeste pas tant qu'on n'effectue pas de tentative de lecture.

Pour certaines applications, il peut être intéressant de disposer d'un circuit capable de surveiller niveau de radioactivité NL de manière active, notamment afin de révéler spontanément le secret S dès le délai D écoulé.

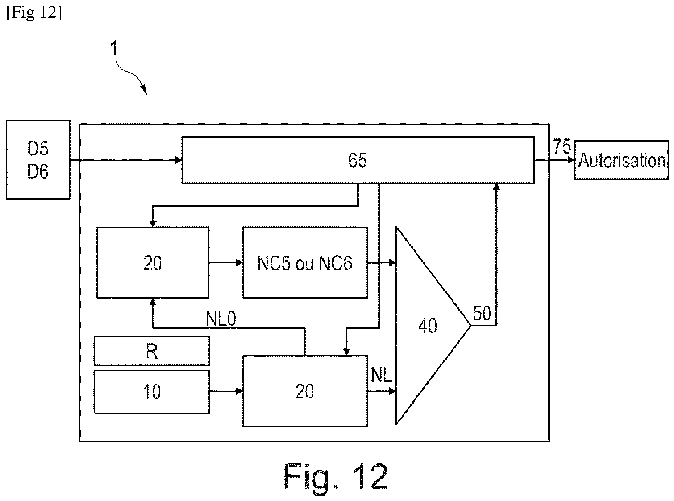

Dans l'exemple illustré à la figure 12, on donne en entrée une durée D5 d'interdiction et une durée D6 d'autorisation. Les données sont acquises par un algorithme de gestion du système 65, qui permet au circuit intégré 1 de s'auto-entretenir en programmant par exemple des plages de temps sur lesquelles certaines actions peuvent être autorisées.

Un tel circuit fonctionne par exemple comme suit :

- la durée d'interdiction D5 est envoyée au circuit de calcul 30 qui calcule un premier niveau cible NC5,
- simultanément, un signal d'autorisation 75 est désactivé,
- le niveau de radioactivité NL est lu de manière régulière tant que le niveau cible NC5 n'est pas atteint, le comparateur 40 renvoyant les résultats de la comparaison à l'algorithme de gestion 65,
- une fois le niveau de radioactivité NL en deçà du niveau cible NC5, l'algorithme de gestion 65 envoie la durée d'autorisation D6 au circuit de calcul 30, qui calcule un second niveau cible NC6,
- simultanément, le signal d'autorisation 75 est activé,
- le niveau de radioactivité NL est lu de manière régulière tant que le niveau cible NC6 n'est pas atteint, le comparateur 40 renvoyant les résultats de la comparaison à l'algorithme de gestion 65, et
- les étapes ci-dessus sont répétées.

Un tel fonctionnement nécessite que le circuit soit alimenté en continu, notamment par une alimentation externe, afin d'effectuer les lectures régulières du niveau de radioactivité NL.

On peut par exemple appliquer ce fonctionnement à l'ouverture de coffres de banque, ou encore pour aider à réguler une addiction à certains applications de téléphone, en programmant les plages de temps où ces applications peuvent être utilisées, et en empêchant leur utilisation hors de ces plages de temps.

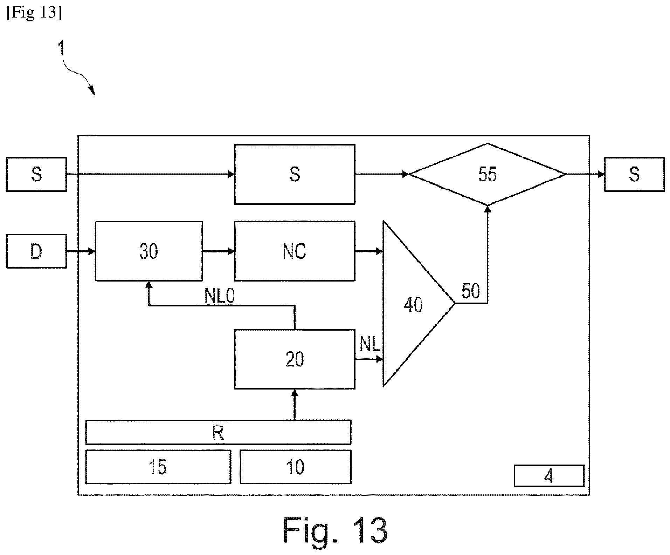

Dans l'exemple illustré à la figure 13, la source radioactive R est utilisée à la fois pour servir d'horloge, et pour produire de l'énergie électrique afin d'alimenter localement le circuit intégré 1.

On peut utiliser deux dépôts d'un matériau radioactif au sein du même circuit intégré 1, chacun associé à une diode, à savoir une diode 15 servant à la production d'énergie grâce au rayonnement bêta émis par exemple, et une diode 10 à la lecture du niveau de radioactivité NL. En variante, on peut utiliser un seul dépôt radioactif et deux diodes 10 et 15, par exemple disposées chacune d'un côté de ce dépôt, ce qui peut permettre de gagner en compacité.

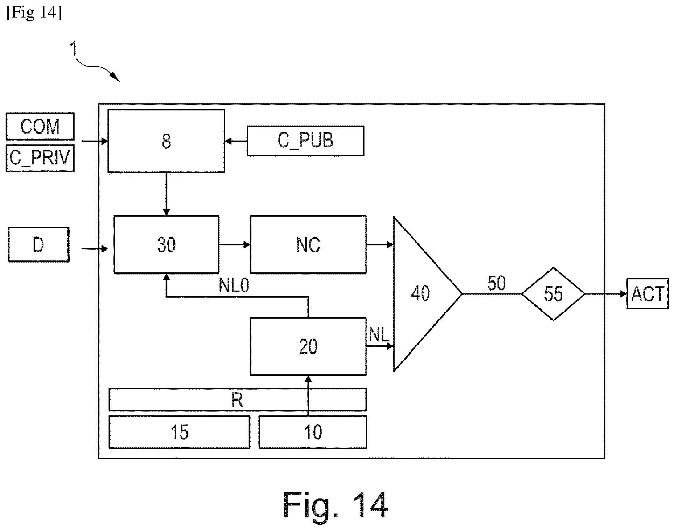

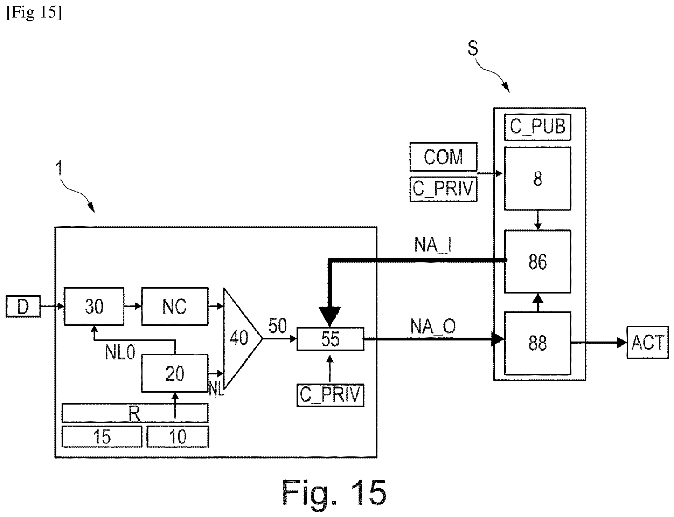

Un tel système peut alors être entièrement autonome dans son fonctionnement., ce qui est avantageux pour de nombreuses applications, dont certaines vont maintenant être décrites en référence aux figures 14 et 15.

Dans l'exemple illustré à la figure 14, on programme le circuit 1 à effectuer une action prédéfinie ACT une fois un délai D écoulé.

On peut sécuriser le circuit 1 en ajoutant une clé publique C_PUB sur la puce 3, la clé C_PUB correspondant à une clé privée C_PRIV détenue par l'utilisateur du circuit 1. Ainsi, lors de la phase de programmation du circuit 1, l'utilisateur donne en entrée un message de commande COM définissant l'action ACT à effectuer et le délai D chiffrés avec sa clé privée C_PRIV. En variante, l'utilisateur donne en entrée le message COM et le délai D en clair, ainsi que le haché du message COM obtenu avec une fonction de hachage et chiffré avec sa clé privée C_PRIV. Le chiffrement avec la clé privée permet de signer le message, assurant ainsi que le message provient bien d'un utilisateur autorisé, possédant la clé privée, message qui est public puisque déchiffrable avec la clé publique disponible par tout le monde.

Le circuit 1 comporte un circuit 8 de vérification qui déchiffre le message avec la clé publique C_PUB ou, selon la variante ci-dessus, déchiffre le haché chiffré et compare avec le haché du message COM et le délai D. Le circuit 1 active ensuite, ou non, la programmation du circuit en autorisant le circuit de calcul 30 à calculer le niveau cible NC correspondant au délai D et au niveau initial de radioactivité NL0 lu par le circuit de lecture 20.

Une fois le niveau cible NC déterminé et mémorisé, on effectue la lecture du niveau de radioactivité NL à intervalles réguliers, notamment en alimentant le circuit de lecture 20 en permanence grâce à la source radioactive R, comme décrit plus haut.

Lorsque le délai D est écoulé, le comparateur 40 génère un changement d'état de la sortie 50 ce qui conduit le circuit de traitement 55 à déclencher l' action ACT à effectuer, de préférence via une liaison protégée.

Une fois le circuit programmé, il n'est pas possible d'empêcher l'action ACT d'être effectuée.

Dans l'exemple illustré à la figure 15, un système extérieur S est programmé pour ne pas effectuer une action ACT tant qu'une condition est remplie, ladite condition dépendant de la sortie générée par le circuit intégré 1.

Dans l'exemple considéré, on définit l'action ACT à effectuer grâce à un message de commande COM donné en entrée du système S. Le système S peut être sécurisé, comme illustré, grâce à une clé publique C_PUB correspondant à une clé privée C_PRIV qui chiffre le message COM.

Dans ce cas, le système S comporte un circuit de vérification 8 déchiffrant le message de commande COM. Puis un générateur 86 de nombres aléatoires génère un nombre aléatoire NA_I qui est envoyé au circuit intégré 1.

Le système S attend en retour un nombre NA_O correspondant au nombre NA_I chiffré avec la clé C_PRIV, que le système S peut déchiffrer avec la clé publique C_PUB et vérifier, en comparant avec le nombre envoyé NA_I, que l'ordre provient bien d'un système connaissant la clé privée C_PRIV. S'il ne reçoit pas le nombre aléatoire attendu (ou qu'il ne reçoit rien) après un délai prédéterminé, l'action ACT est effectuée. Sinon, un nouveau nombre aléatoire NA_I est de nouveau envoyé.

Le circuit intégré 1 est donc programmé de façon à choisir le moment où l'action ACT va être effectuée. Un délai D est donné en entrée lors de la phase de programmation, ce qui permet, comme décrit précédemment, de calculer le niveau cible NC à partir du niveau d'activité initial NL0 de la source radioactive R, lu par le circuit de lecture 20.

Le circuit intégré 1 comporte une mémoire non volatile sur laquelle la clé privée C_PRIV est mémorisée.

Le circuit de traitement 55 est configuré pour envoyer au système S, à partir de la clé privée C_PRIV, le nombre chiffré attendu NA_O tant que la sortie interne 50 du comparateur 40 n'a pas changé d'état, c'est-à-dire tant que le niveau lu NL est au-dessus du niveau cible NC.

Une fois le délai D écoulé, le niveau lu NL passe en deçà du niveau cible NC et le comparateur 40 génère un changement d'état de la sortie interne 50. Le circuit de traitement, en réponse, n'envoie pas le nombre chiffré NA_O et l'action ACT est par conséquent effectuée.

Le circuit 1 est alimenté en continu, par exemple grâce à la source radioactive R, et la réception du nombre aléatoire NA_I provenant du système S déclenche la requête de lecture du niveau de radioactivité NL.

Une fois programmés, le circuit intégré 1 et le système S sont entièrement autonomes et il n'est pas possible d'empêcher l'action ACT d'être effectuée.

L'invention n'est pas limitée à une source radioactive dont la décroissance naturelle sert « d'horloge » au circuit intégré 1.

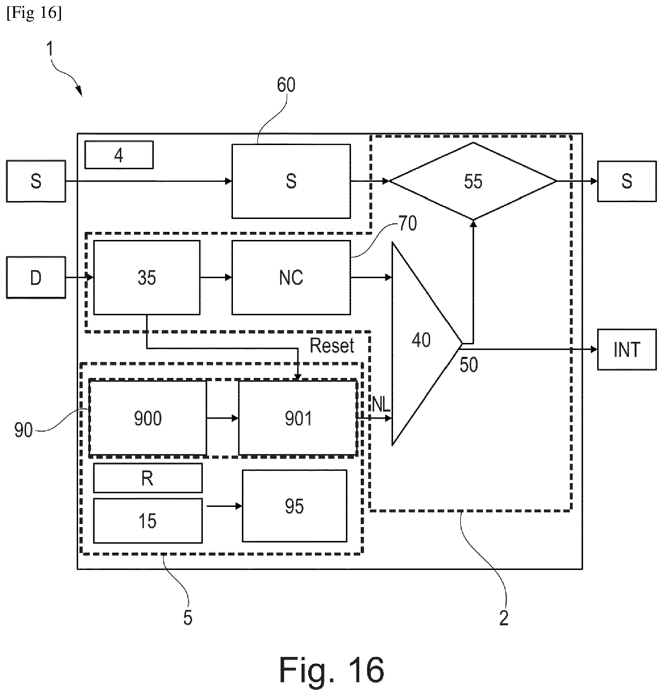

Dans l'exemple de réalisation illustré à la figure 16, le circuit intégré 1 comporte un composant chrono évolutif 5 comportant une source radioactive R servant de source d'énergie pour alimenter un circuit d'horloge 90.

Comme décrit précédemment, la source radioactive R est par exemple déposée sur une diode PIN 15, elle-même connectée à un module d'alimentation 95. Cet ensemble fournit une tension régulée à l'ensemble du circuit intégré, ou au circuit d'horloge 90 uniquement.

Le circuit d'horloge 90 comporte un oscillateur 900, par exemple un oscillateur RC, à base d'un quartz ou un MEMs, et un compteur 901 comptabilisant les impulsions.

Le circuit intégré 1 comporte en outre un circuit de calcul 35 qui prend en entrée un délai D décidé par l'utilisateur et transforme ce délai D, par exemple exprimé en secondes ou indiqué avec une date cible en fournissant la date réelle, en une valeur de comptage cible NC fonction de la fréquence de l'oscillateur. L'oscillateur 900 est par exemple un oscillateur RC de fréquence environ 12 Hz, celle-ci pouvant être obtenue lors d'un étalonnage en usine au préalable, et stockée dans une mémoire non volatile. Ainsi, pour une telle fréquence et un délai D de 10 ans, le compteur 901 est capable de compter $3.78 \cdot 10^{12}$ impulsions, soit 42 bits.

La valeur de comptage cible NC est mémorisée dans une mémoire non volatile 70.

Le compteur 901 possède une remise à zéro qui sera activée au moment de la programmation du délai D.

Le circuit intégré 1 peut présenter, comme représenté à la figure 16, une sortie externe INT, dont l'état change dès que le délai D est écoulé. Cette sortie est par exemple connectée à une entrée « interruption » d'un microcontrôleur externe.

Bien entendu, l'invention n'est pas limitée aux exemples qui viennent d'être décrits.

On peut par exemple diviser le secret S en plusieurs parties afin de le rendre moins vulnérable. Ces parties peuvent être réparties sur des circuits séparés, ou bien révéler le secret de manière progressive en faisant dépendre la lecture des différentes parties de l'écoulement de délais différents.

On peut encore utiliser des algorithmes de cryptographie connus de l'état de l'art, tel que le partage de clé secrète de Shamir, afin de sécuriser l'accès au secret S.

**Revendications**

1. Circuit intégré programmable (1), comportant :

    - au moins un composant chrono évolutif (5) évoluant de manière autonome au sein du circuit intégré, en fonction du temps écoulé depuis une phase d'initialisation du circuit intégré, cette évolution se faisant grâce à une source radioactive interne (R), notamment du $^{63}$Ni,
    - au moins un circuit de contrôle (2) sensible à l'évolution temporelle dudit composant (5) et présentant au moins une sortie interne protégée (50) qui ne change d'état qu'après qu'une durée prédéfinie (D), programmable, se soit écoulée depuis la phase d'initialisation du circuit intégré.

2. Circuit intégré selon la revendication 1, comportant au moins une mémoire protégée (60) dont la lecture n'est possible que lorsque la sortie interne (50) du circuit de contrôle (2) est dans un état prédéfini, le circuit comportant de préférence un fusible (4) pour désactiver au moins une entrée du circuit (1) permettant de programmer la durée prédéfinie (D).

3. Circuit selon la revendication 1 ou 2, le circuit de contrôle (2) comportant :

    - au moins un circuit de lecture (20) du niveau de radioactivité (NL) de la source (R),
    - au moins un comparateur (40) pour comparer le niveau de radioactivité lu (NL) avec un niveau cible (NC) et générer un changement d'état de la sortie interne protégée (50) seulement lorsque le niveau de radioactivité est en deçà du niveau cible, en raison de la décroissance naturelle de l'activité de la source.

4. Circuit intégré selon la revendication 3, le composant chrono évolutif (5) comportant une diode (10) soumise au rayonnement de la source (R), la source radioactive (R) étant notamment déposée sur la diode (10), la diode étant de préférence une diode PIN.

5. Circuit selon l'une des revendications 3 et 4, le circuit de contrôle (2) comportant un circuit de calcul (30) du niveau cible (NC) à partir d'une date ou durée donnée en entrée (D) et du niveau de la source (NL0) au moment de la définition du niveau cible (NC).

6. Circuit selon l'une quelconque des revendications 3 à 5, comportant

    - au moins une première et deuxième sources radioactives (R1, R2),
    - un premier circuit de contrôle (21) comportant :

        ∘ au moins un circuit de lecture (201) du niveau de radioactivité de la première source radioactive (R1),
        ∘ au moins un comparateur (401) pour comparer le niveau de radioactivité lu avec un premier niveau cible (NC1) et autoriser un changement d'état d'une première sortie interne (501), notamment autoriser la lecture d'un premier secret (S1), seulement lorsque le niveau de radioactivité lu (NL1) est en deçà du premier niveau cible, en raison de la décroissance naturelle de l'activité de la première source (R1),

    - un deuxième circuit de contrôle (22) comportant :

        ∘ au moins un circuit de lecture (202) du niveau de radioactivité de la deuxième source (R2),
        ∘ au moins un comparateur (402) pour comparer le niveau de radioactivité lu avec un deuxième niveau cible (NC2) et autoriser un changement d'état d'une deuxième sortie interne (502), notamment autoriser la lecture d'un deuxième secret (S2), seulement lorsque le niveau de radioactivité lu est en deçà du deuxième niveau cible, en raison de la décroissance naturelle de l'activité de la deuxième source (R2),

les première et deuxième sources (R1, R2) ayant des durées de demi-vie différentes.

7. Circuit selon l'une quelconque des revendication 3 à 5, comportant

    - un premier circuit de contrôle comportant :

        ◦ au moins un comparateur pour comparer le niveau de radioactivité lu (NL) avec un premier niveau cible (NC1) et autoriser un changement d'état d'une première sortie interne (501), notamment autoriser la lecture d'un premier secret (S1), seulement lorsque le niveau de radioactivité lu (NL) est en deçà du premier niveau cible, en raison de la décroissance naturelle de l'activité de la source (R),

    - un deuxième circuit de contrôle comportant :

        ◦ au moins un comparateur pour comparer le niveau de radioactivité lu avec un deuxième niveau cible (NC2) et autoriser un changement d'état d'une deuxième sortie interne (502), notamment autoriser la lecture d'un deuxième secret (S2), seulement lorsque le niveau de radioactivité lu (NL) est en deçà du deuxième niveau cible, en raison de la décroissance naturelle de l'activité de la source (R).

8. Circuit selon l'une quelconque des revendications 3 à 5, comportant :

    - au moins un comparateur (403) pour comparer le niveau de radioactivité lu (NL) avec un premier niveau cible (NC3) et générer une sortie interne correspondante (503),
    - au moins un comparateur (404) pour comparer le niveau de radioactivité lu (NL) avec un deuxième niveau cible (NC4) et générer une sortie interne correspondante (504),

le circuit de contrôle étant agencé pour n'autoriser une action prédéfinie, notamment la lecture d'un secret (S), que lorsque les sorties internes (503, 504) des premier et deuxième comparateurs sont dans des états prédéfinis.

9. Circuit selon l'une quelconque des revendications 3 à 8, la source radioactive (R) servant aussi à alimenter le circuit intégré ou ce dernier comportant une source radioactive destinée à son alimentation électrique.

10. Circuit intégré selon l'une des revendications 1 et 2, ledit composant comportant :

    - Au moins une source interne d'énergie (95), notamment bétavoltaïque, utilisant le rayonnement produit par la source radioactive (R),
    - au moins un circuit d'horloge (90) alimenté par la source interne d'énergie, le circuit de contrôle (2) comportant de préférence un circuit de calcul (35) pour convertir une date ou un délai (D) en entrée en un nombre de référence (NC) correspondant d'impulsions du circuit d'horloge, le circuit d'horloge (90) étant agencé pour comptabiliser le nombre d'impulsions d'horloge s'étant écoulé depuis la phase d'initialisation, le circuit de contrôle (2) comparant le nombre d'impulsions écoulé (NL) au nombre de référence (NC).

11. Procédé pour protéger une information pendant une durée prédéfinie à l'aide d'un circuit intégré (1) tel que défini dans l'une quelconque des revendications 2 à 10, comportant les étapes consistant à :

    - Chiffrer l'information de manière à ne permettre son déchiffrement qu'en présence d'au moins une clé de déchiffrement (S),
    - enregistrer ladite clé de déchiffrement en tant que secret dans la mémoire protégée (60) du circuit intégré,
    - programmer ledit circuit avec la durée prédéfinie (D).

12. Procédé pour effectuer une action prédéfinie à partir d'un délai ou d'une date programmée, comportant les étapes suivantes :

    - enregistrer dans un circuit intégré (1) selon l'une quelconque des revendications 1 à 10 un délai ou une date (D) ou un niveau cible (NC) correspondant à partir de laquelle ou duquel une action (ACT) doit être effectuée,
    - effectuer ladite action lorsque la sortie interne (50) du circuit (1) change d'état une fois la date atteinte ou le délai (D) écoulé et/ou que le niveau de radioactivité lu (NL) a franchi le niveau cible (NC) correspondant,
    l'action prédéfinie étant par exemple l'activation d'une carte bancaire ou autre carte à puce, de façon à ne rendre cette carte utilisable par un utilisateur qu'après un délai ou une date D prédéfini et/ou avant un délai ou une date D prédéfini,
    ou
    l'action prédéfinie étant par exemple une action d'activation d'une application chargée dans un dispositif électronique, notamment un téléphone portable, de façon à ne rendre cette application utilisable par un utilisateur qu'après un délai ou une date D prédéfini.

13. Procédé selon la revendication précédente, dans lequel on authentifie un utilisateur du circuit en vérifiant la correspondance entre une clé publique (C_PUB) enregistrée sur le circuit et une clé privée (C_PRIV) détenue par l'utilisateur, et dans lequel, en fonction du résultat de cette vérification, on autorise, ou non, la programmation du circuit.

14. Procédé selon la revendication 12 ou 13, dans lequel le circuit intégré reçoit une requête et traite cette requête en fonction de l'état de la sortie interne, notamment reçoit un nombre aléatoire (NA_I) et renvoie un nombre correspondant (NA_O) qui l'authentifie tant que la sortie interne (50) est dans un état prédéfini.

15. Procédé selon l'une quelconque des revendications 12 à 14, le circuit (1) étant selon l'une des revendications 1 à 9, dans lequel on détermine le niveau cible (NC) à partir de moyens de calcul externes au circuit intégré.

16. Procédé de génération d'une blockchain au cours duquel au moins une action de validation d'un bloc dépend de l'écoulement d'une durée prédéfinie au sein d'un circuit tel que défini dans l'une quelconque des revendications 1 à 10.

**Patentansprüche**

1. Programmierbare integrierte Schaltung (1), die aufweist:

- mindestens ein sich zeitlich entwickelndes Bauteil (5), das sich innerhalb der integrierten Schaltung abhängig von der seit einer Initialisierungsphase der integrierten Schaltung vergangenen Zeit autonom entwickelt, wobei diese Entwicklung dank einer inneren radioaktiven Quelle (R), insbesondere $^{63}$Ni, erfolgt,
- mindestens eine Steuerschaltung (2), die für die zeitliche Entwicklung des Bauteils (5) empfindlich ist und mindestens einen geschützten inneren Ausgang (50) aufweist, der seinen Zustand erst ändert, wenn eine programmierbare vordefinierte Dauer (D) seit der Initialisierungsphase der integrierten Schaltung vergangen ist.

2. Integrierte Schaltung nach Anspruch 1, die mindestens einen geschützten Speicher (60) aufweist, dessen Lesen nur möglich ist, wenn der innere Ausgang (50) der Steuerschaltung (2) in einem vordefinierten Zustand ist, wobei die Schaltung vorzugsweise eine Sicherung (4) aufweist, um mindestens einen Eingang der Schaltung (1) zu deaktivieren, der es ermöglicht, die vordefinierte Dauer (D) zu programmieren.

3. Schaltung nach Anspruch 1 oder 2, wobei die Steuerschaltung (2) aufweist:

- mindestens eine Leseschaltung (20) des Radioaktivitätsniveaus (NL) der Quelle (R),
- mindestens einen Komparator (40), um das gelesene Radioaktivitätsniveau (NL) mit einem Zielniveau (NC) zu vergleichen und eine Zustandsänderung des geschützten inneren Ausgangs (50) nur zu erzeugen, wenn das Radioaktivitätsniveau unterhalb des Zielniveaus ist, aufgrund der natürlichen Abnahme der Aktivität der Quelle.

4. Integrierte Schaltung nach Anspruch 3, wobei das sich zeitlich entwickelnde Bauteil (5) eine Diode (10) aufweist, die der Strahlung der Quelle (R) ausgesetzt ist, wobei die radioaktive Quelle (R) insbesondere auf die Diode (10) aufgebracht wird, wobei die Diode vorzugsweise eine PIN-Diode ist.

5. Schaltung nach einem der Ansprüche 3 und 4, wobei die Steuerschaltung (2) eine Rechenschaltung (30) des Zielniveaus (NC) ausgehend von einem gegebenen Datum oder Dauer am Eingang (D) und vom Niveau der Quelle (NL0) zum Zeitpunkt der Definition des Zielniveaus (NC) aufweist.

6. Schaltung nach einem der Ansprüche 3 bis 5, die aufweist

- mindestens eine erste und zweite radioaktive Quelle (R1, R2),
- eine erste Steuerschaltung (21), die aufweist:

  ∘ mindestens eine Leseschaltung (201) des Radioaktivitätsniveaus der ersten radioaktiven Quelle (R1),
  ∘ mindestens einen Komparator (401), um das gelesene Radioaktivitätsniveau mit einem ersten Zielniveau (NC1) zu vergleichen und eine Zustandsänderung eines ersten inneren Ausgangs (501) zu genehmigen, insbesondere das Lesen eines ersten Geheimnisses (S1) zu genehmigen, nur wenn das gelesene Radioaktivitätsniveau (NL1) unterhalb des ersten Zielniveaus ist, aufgrund der natürlichen Abnahme der Aktivität der ersten Quelle (R1),

- eine zweite Steuerschaltung (22), die aufweist:

  ∘ mindestens eine Leseschaltung (202) des Radioaktivitätsniveaus der zweiten Quelle (R2),

○ mindestens einen Komparator (402), um das gelesene Radioaktivitätsniveau mit einem zweiten Zielniveau (NC2) zu vergleichen und eine Zustandsänderung eines zweiten inneren Ausgangs (502) zu genehmigen, insbesondere das Lesen eines zweiten Geheimnisses (S2) zu genehmigen, nur wenn das gelesene Radioaktivitätsniveau unterhalb des zweiten Zielniveaus ist, aufgrund der natürlichen Abnahme der Aktivität der zweiten Quelle (R2),

wobei die ersten und zweiten Quellen (R1, R2) unterschiedliche Halbwertzeitdauern haben.

7. Schaltung nach einem der Ansprüche 3 bis 5, die aufweist:

   - eine erste Steuerschaltung, die aufweist:

   ○ mindestens einen Komparator, um das gelesene Radioaktivitätsniveau (NL) mit einem ersten Zielniveau (NC1) zu vergleichen und eine Zustandsänderung eines ersten inneren Ausgangs (501) zu genehmigen, insbesondere das Lesen eines ersten Geheimnisses (S1) zu genehmigen, nur wenn das gelesene Radioaktivitätsniveau (NL) unterhalb des ersten Zielniveaus ist, aufgrund der natürlichen Abnahme der Aktivität der Quelle (R),

   - eine zweite Steuerschaltung, die aufweist:

   ○ mindestens einen Komparator, um das gelesene Radioaktivitätsniveau mit einem zweiten Zielniveau (NC2) zu vergleichen und eine Zustandsänderung eines zweiten inneren Ausgangs (502) zu genehmigen, insbesondere das Lesen eines zweiten Geheimnisses (S2) zu genehmigen, nur wenn das gelesene Radioaktivitätsniveau (NL) unterhalb des zweiten Zielniveaus ist, aufgrund der natürlichen Abnahme der Aktivität der Quelle (R).

8. Schaltung nach einem der Ansprüche 3 bis 5, die aufweist:

   - mindestens einen Komparator (403), um das gelesene Radioaktivitätsniveau (NL) mit einem ersten Zielniveau (NC3) zu vergleichen und einen entsprechenden inneren Ausgang (503) zu erzeugen,
   - mindestens einen Komparator (404), um das gelesene Radioaktivitätsniveau (NL) mit einem zweiten Zielniveau (NC4) zu vergleichen und einen entsprechenden inneren Ausgang (504) zu erzeugen,

wobei die Steuerschaltung eingerichtet ist, um eine vordefinierte Aktion, insbesondere das Lesen eines Geheimnisses (S), nur zu genehmigen, wenn die inneren Ausgänge (503, 504) der ersten und zweiten Komparatoren in vordefinierten Zuständen sind.

9. Schaltung nach einem der Ansprüche 3 bis 8, wobei die radioaktive Quelle (R) auch dazu dient, die integrierte Schaltung zu versorgen, oder diese letztere eine radioaktive Quelle aufweist, die für ihre elektrische Versorgung bestimmt ist.

10. Integrierte Schaltung nach einem der Ansprüche 1 und 2, wobei das Bauteil aufweist:

   - mindestens eine innere Energiequelle (95), insbesondere betavoltaisch, die die von der radioaktiven Quelle (R) erzeugte Strahlung nutzt,
   - mindestens eine von der inneren Energiequelle versorgte Taktgeberschaltung (90), wobei die Steuerschaltung (2) vorzugsweise eine Rechenschaltung (35) aufweist, um ein Datum oder eine Frist (D) am Eingang in eine entsprechende Bezugsanzahl (NC) von Impulsen der Taktgeberschaltung umzuwandeln, wobei die Taktgeberschaltung (90) eingerichtet ist, um die Anzahl von Taktimpulsen zu erfassen, die seit der Initialisierungsphase vergangen sind, wobei die Steuerschaltung (2) die vergangene Impulsanzahl (NL) mit der Bezugsanzahl (NC) vergleicht.

11. Verfahren zum Schutz einer Information während einer vordefinierten Dauer mit Hilfe einer wie in einem der Ansprüche 2 bis 10 definierten integrierten Schaltung (1), das die Schritte aufweist, die darin bestehen:

   - die Information so zu verschlüsseln, dass ihre Entschlüsselung nur in Gegenwart mindestens eines Entschlüsselungsschlüssels (S) erlaubt wird,
   - den Entschlüsselungsschlüssel als Geheimnis im geschützten Speicher (60) der integrierten Schaltung zu speichern,
   - die Schaltung mit der vordefinierten Dauer (D) zu programmieren.

12. Verfahren zur Ausführung einer vordefinierten Aktion ausgehend von einer programmierten Frist oder Datum, das die folgenden Schritte aufweist:

   - Speichern in einer integrierten Schaltung (1) nach einem der Ansprüche 1 bis 10 einer Frist oder eines Datums (D) oder eines entsprechenden Zielniveaus (NC), von der oder dem ausgehend eine Aktion (ACT) ausgeführt werden soll,
- Ausführen der Aktion, wenn der innere Ausgang (50) der Schaltung (1) den Zustand ändert, sobald das Datum erreicht oder die Frist (D) abgelaufen ist und/oder das gelesene Radioaktivitätsniveau (NL) das entsprechende Zielniveau (NC) überschritten hat,
wobei die vordefinierte Aktion zum Beispiel die Aktivierung einer Bankkarte oder anderen Chipkarte ist, um diese Karte erst nach einer vordefinierten Frist oder Datum D und/oder vor einer vordefinierten Frist oder Datum von einem Benutzer nutzbar zu machen,
oder
die vordefinierte Aktion zum Beispiel eine Aktion der Aktivierung einer in eine elektronische Vorrichtung, insbesondere ein Mobiltelefon, geladenen Anwendung ist, um diese Anwendung erst nach einer vordefinierten Frist oder einem Datum D für einen Benutzer nutzbar zu machen.

**13.** Verfahren nach dem vorhergehenden Anspruch, wobei ein Benutzer der Schaltung authentifiziert wird, indem die Entsprechung zwischen einem in der Schaltung gespeicherten öffentlichen Schlüssel (C_PUB) und einem im Besitz des Benutzers befindlichen privaten Schlüssel (C_PRIV) überprüft wird, und wobei, abhängig vom Ergebnis dieser Überprüfung, die Programmierung der Schaltung genehmigt wird oder nicht.

**14.** Verfahren nach Anspruch 12 oder 13, wobei die integrierte Schaltung eine Anforderung empfängt und diese Anforderung abhängig vom Zustand des inneren Ausgangs verarbeitet, insbesondere eine Zufallszahl (NA_I) empfängt und eine entsprechende Zahl (NA_O) zurückschickt, die sie authentifiziert, solange der innere Ausgang (50) in einem vordefinierten Zustand ist.

**15.** Verfahren nach einem der Ansprüche 12 bis 14, wobei die Schaltung (1) gemäß einem der Ansprüche 1 bis 9 ist, wobei das Zielniveau (NC) ausgehend von Recheneinrichtungen außerhalb der integrierten Schaltung bestimmt wird.

**16.** Verfahren zur Erzeugung einer Blockchain, während der mindestens eine Aktion der Validierung eines Blocks vom Ablauf einer vordefinierten Dauer innerhalb einer wie in einem der Ansprüche 1 bis 10 definierten Schaltung abhängt.

## Claims

**1.** Programmable integrated circuit (1), comprising:

- at least one component (5) that changes over time, changing autonomously within the integrated circuit, as a function of the time that has elapsed since an initialization phase of the integrated circuit, this change taking place by virtue of an internal radioactive source (R), in particular $^{63}$Ni,
- at least one control circuit (2) sensitive to the temporal change of said component (5) and having at least one protected internal output (50) that changes state only after a programmable predefined duration (D) has elapsed since the initialization phase of the integrated circuit.

**2.** Integrated circuit according to Claim 1, comprising at least one protected memory (60) read access to which is possible only when the internal output (50) of the control circuit (2) is in a predefined state, the circuit preferably comprising a fuse (4) for deactivating at least one input of the circuit (1) for programming the predefined duration (D) .

**3.** Circuit according to Claim 1 or 2, the control circuit (2) comprising:

- at least one readout circuit (20) for reading the radioactivity level (NL) of the source (R),
- at least one comparator (40) for comparing the read radioactivity level (NL) with a target level (NC) and generating a change of state of the protected internal output (50) only when the radioactivity level is below the target level, due to the natural decrease in the activity of the source.

**4.** Integrated circuit according to Claim 3, the component (5) that changes over time comprising a diode (10) that is subjected to the radiation from the source (R), the radioactive source (R) in particular being deposited on the diode (10), the diode preferably being a PIN diode.

**5.** Circuit according to either of Claims 3 and 4, the control circuit (2) comprising a computing circuit (30) for computing the target level (NC) from a date or duration given at input (D) and the level of the source (NL0) at the time when the target level (NC) is defined.

**6.** Circuit according to any one of Claims 3 to 5, comprising

- at least a first and second radioactive source (R1, R2),
- a first control circuit (21) comprising:

  ∘ at least one readout circuit (201) for reading the radioactivity level of the first radioactive source (R1),
  ∘ at least one comparator (401) for comparing the read radioactivity level with a first target level (NC1) and authorizing a change of state of a first internal output (501), in particular authorizing the reading of a first secret (S1), only when the read radioactivity level (NL1) is below the first target level, due to the natural decrease in the activity of the first source (R1),

- a second control circuit comprising:

  ○ at least one readout circuit (202) for reading the radioactivity level of the second source (R2),
  ○ at least one comparator (402) for comparing the read radioactivity level with a second target level (NC2) and authorizing a change of state of a second internal output (502), in particular authorizing the reading of a second secret (S2), only when the read radioactivity level is below the second target level due to the natural decrease in the activity of the second source,

the first and second sources (R1, R2) having different half-life durations.

7. Circuit according to any one of Claims 3 to 5, comprising

  - a first control circuit comprising:

    ○ at least one comparator for comparing the read radioactivity level (NL) with a first target level (NC1) and authorizing a change of state of a first internal output (501), in particular authorizing the reading of a first secret (S1), only when the read radioactivity level (NL) is below the first target level, due to the natural decrease in the activity of the source (R),

  - a second control circuit comprising:

    ○ at least one comparator for comparing the read radioactivity level with a second target level (NC2) and authorizing a change of state of a second internal output (502), in particular authorizing the reading of a second secret (S2), only when the read radioactivity level (NL) is below the second target level, due to the natural decrease in the activity of the source (R).

8. Circuit according to any one of Claims 3 to 5, comprising:

  - at least one comparator (403) for comparing the read radioactivity level (NL) with a first target level (NC3) and generating a corresponding internal output (503),
  - at least one comparator (404) for comparing the read radioactivity level (NL) with a second target level (NC4) and generating a corresponding internal output (504),

the control circuit being designed to authorize a predefined action, in particular the reading of a secret (S), only when the internal outputs (503, 504) of the first and second comparators are in predefined states.

9. Circuit according to any one of Claims 3 to 8, the radioactive source (R) also being used to supply power to the integrated circuit, or the latter comprising a radioactive source intended to supply electric power thereto.

10. Integrated circuit according to either of Claims 1 and 2, said component comprising:

  - at least one, in particular betavoltaic, internal energy source (95) using the radiation produced by the radioactive source (R),
  - at least one clock circuit (90) supplied with power by the internal energy source, the control circuit (2) preferably comprising a computing circuit (35) for converting a date or a period (D) at input into a corresponding reference number (NC) of pulses of the clock circuit, the clock circuit (90) being designed to count the number of clock pulses that have elapsed since the initialization phase, the control circuit (2) comparing the elapsed number of pulses (NL) with the reference number (NC).

11. Method for protecting information for a predefined duration with the aid of an integrated circuit (1) according to any one of Claims 2 to 10, comprising the steps of:

  - encrypting the information so as to allow it to be decrypted only in the presence of at least one decryption key (S),
  - storing said decryption key as a secret in the protected memory (60) of the integrated circuit,
  - programming said circuit with the predefined duration (D).

12. Method for performing a predefined action after a period or a programmed date, comprising the following steps:

  - storing, in an integrated circuit (1) according to any one of Claims 1 to 10, a period or a date (D) or a corresponding target level (NC) after which or from which an action (ACT) should be performed,

- performing said action when the internal output (50) of the circuit (1) changes state once the date has been reached or the period (D) has elapsed and/or the read radioactivity level (NL) has crossed the corresponding target level (NC),

the predefined action being for example the activation of a bank card or another chip card, so as to allow this card to be used by a user only after a predefined period or date (D) and/or before a predefined period or date (D),

or

the predefined action being for example an action of activating an application loaded into an electronic device, in particular a mobile telephone, so as to allow this application to be used by a user only after a predefined period or date (D).

13. Method according to the preceding claim, wherein a user of the circuit is authenticated by checking the correspondence between a public key (C_PUB) stored on the circuit and a private key (C_PRIV) held by the user, and wherein, based on the result of this check, programming of the circuit is or is not authorized.

14. Method according to Claim 12 or 13, wherein the integrated circuit receives a request and processes this request based on the state of the internal output, in particular receives a random number (NA_I) and returns a corresponding number (NA_O) that authenticates it for as long as the internal output (50) is in a predefined state.

15. Method according to any one of Claims 12 to 14, the circuit (1) being in accordance with one of Claims 1 to 9, wherein the target level (NC) is determined using computing means external to the integrated circuit.

16. Method for generating a blockchain, in which at least one action of validating a block depends on a predefined duration having elapsed within a circuit as defined in any one of Claims 1 to 10.

EP 4 116 855 B1

[Fig 1]

Fig. 1

[Fig 2]

Fig. 2

19

EP 4 116 855 B1

[Fig 3]

Fig. 3

[Fig 4]

Fig. 4

20

EP 4 116 855 B1

[Fig 5]

Fig. 5

[Fig 6]

Fig. 6

[Fig 7A]

Fig. 7A

[Fig 7B]

Fig. 7B

[Fig 7C]

Fig. 7C

[Fig 8]

Fig. 8

[Fig 9]

Fig. 9

[Fig 10]

Fig. 10

[Fig 11]

Fig. 11

[Fig 12]

Fig. 12

[Fig 13]

Fig. 13

[Fig 14]

Fig. 14

[Fig 15]

Fig. 15

[Fig 16]

Fig. 16

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 9530529 B
- US 10083771 B
- US 7476865 B
- US 10708044 B
- JP 10142340 B
- KR 20150057884

**Littérature non-brevet citée dans la description**

- **PROFESSEUR DELAHAYE.** Envoyer des messages à retardement. *Pour la Science,* Décembre 2020, (518
- **KRASNOV, ANDREY et al.** A nuclear battery based on silicon pin structures with electroplating 63Ni layer. *Nuclear Engineering and Technology,* 2019, vol. 51 (8), 1978-1982
- **WYRSCH, NICOLAS et al.** Thin-film silicon detectors for particle détection. *physica status solidi (c),* 2004, vol. 1 (5), 1284-1291